# EUROPÄISCHE PATENTSCHRIFT

(11) **EP 1 638 824 B1**
(45) Veröffentlichungstag und Bekanntmachung des Hinweises auf die Patenterteilung: **26.09.2007**
(21) Anmeldenummer: 04738493.8
(22) Anmeldetag: 08.05.2004
(51) Int. Cl.: B60T 7/12

(54) **VERFAHREN UND VORRICHTUNG ZUR DEAKTIVIERUNG EINER HILLHOLDERFUNKTION**
METHOD AND DEVICE FOR DEACTIVATING A HILL HOLDER FUNCTION
PROCEDE ET DISPOSITIF DE DESACTIVATION D'UNE FONCTION ANTI-RECUL

(30) Priorität: 16.05.2003 DE 10322125
(43) Veröffentlichungstag der Anmeldung: 29.03.2006
(73) Patentinhaber: ROBERT BOSCH GMBH, 70442 Stuttgart (DE)
(72) Erfinder: STREIT, Andreas, 71706 Markgroeningen (DE); BRAEUER, Toni, 71636 Ludwigsburg (DE)
(86) Internationale Anmeldenummer: PCT/DE2004/000965
(87) Internationale Veröffentlichungsnummer: WO 2004/103785

(56) Entgegenhaltungen:
- WO-A-20/04056632
- DE-A- 10 009 504
- DE-A- 10 058 071
- DE-A- 10 063 062
- DE-A- 19 950 028

## Beschreibung

### Stand der Technik

Die Erfindung betrifft ein Verfahren und eine Vorrichtung zur Deaktivierung einer Hillholderfunktion bei einem Kraftfahrzeug.

Aus der DE 199 50 034 A1 sind ein Verfahren und eine Vorrichtung zur Steuerung einer Bremsanlage bekannt. Dabei wird in wenigstens einem Betriebszustand bei betätigtem Bremspedal Bremskraft an wenigstens einem Rad des Fahrzeugs unabhängig vom Ausmaß der Pedalbetätigung gehalten. Dabei sind für die Aktivierung oder Deaktivierung der Funktion verschiedene Bedingungen gemeinsam oder alternativ vorgesehen.

Aus der DE 199 50 028 A1 sind ein Verfahren und eine Vorrichtung zur Steuerung eines Fahrzeugs bekannt, bei welchen wenigstens bei Fahrzeugstillstand die Bremskraft an wenigstens einem Rad des Fahrzeugs unabhängig vom Ausmaß der Pedalbetätigung gehalten wird. Bei Vorliegen einer Abschaltbedingung wird die Bremskraft abgebaut, während bei erkanntem Rutschen des Fahrzeugs Bremskraft unabhängig von dieser Bedingung abgebaut wird. Ferner werden Maßnahmen zur Erkennung des Rutschens des Fahrzeugs und einer Rutschgefahr vorgestellt.

Die Merkmale der Oberbegriffe der unabhängigen Ansprüche sind der DE 199 50 028 A1 entnommen.

### Vorteile der Erfindung

Die Erfindung betrifft ein Verfahren zur Steuerung der Bremsanlage eines Kraftfahrzeugs,
- bei dem zur Verhinderung des Wegrollens des Fahrzeugs nach einem Haltevorgang ein erster Bremskraftwert an wenigstens einem Rad des Fahrzeugs fahrerunabhängig eingestellt und während einer vorgegebenen, begrenzten Haltezeit gehalten wird oder allgemein bis zum Vorliegen einer Abbaubedingung gehalten wird.
Insbesondere handelt es sich dabei um einen sogenannten "Hillholder".

Der Kern der Erfindung besteht darin
- dass eine eine Querbewegung des Fahrzeugs charakterisierende Quergröße ermittelt wird und
- abhängig von der Quergröße ein Abbau der Bremskraft bereits vor Ablauf der vorgegebenen Haltezeit erfolgt.
Dadurch kann bei einer erkannten Drehbewegung des Fahrzeugs der Hillholder deaktiviert werden. Dadurch wird ein Sicherheitsgewinn für das Fahrzeug und dessen Insassen erreicht.

Erfindungsgemäß handelt es sich bei der Abbaubedingung um das Verstreichen eines Haltezeitintervalls vorgegebener Länge. Der Beginn des Haltezeitintervalls ist dabei durch die Initiierung des Hillholders gekennzeichnet.

Erfindungsgemäß geht die Gierrate in die Ermittlung der Quergröße ein. Die Gierrate ist ein besonders deutliches Maß für eine Drehbewegung des Fahrzeugs. Auch die beispielsweise mittels eines Querbeschleunigungssensors ermittelt Querbeschleunigung ist jedoch hierfür brauchbar.

Deshalb ist eine vorteilhafte Ausgestaltung der Erfindung auch dadurch gekennzeichnet, dass ein Abbau der Bremskraft bereits vor Ablauf der vorgegebenen Haltezeit erfolgt, wenn die Gierrate oder die Querbeschleunigung oder eine mit diesen zusammenhängenden Größe einen vorgegebenen Grenzwert überschreitet.

Eine vorteilhafte Ausgestaltung der Erfindung ist dadurch gekennzeichnet,
- dass nach erreichtem Haltevorgang der Wert der Gierrate ermittelt und abgespeichert wird und
- dass ein Abbau der Bremskraft bereits vor Ablauf der vorgegebenen Haltezeit erfolgt, wenn der Betrag der Differenz zwischen der momentan ermittelten Gierrate und der abgespeicherten Gierrate einen vorgegebenen Grenzwert überschreitet.
Dadurch kann insbesondere eine Fehldeaktivierung des Hillholders aufgrund eines eventuellen Offsetwertes des Gierratensignals verhindert werden.

Eine vorteilhafte Ausgestaltung der Erfindung ist dadurch gekennzeichnet,
- dass abhängig von der Quergröße ein Rutschvorgang des Kraftfahrzeugs detektiert wird und
- bei einem detektierten Rutschvorgang ein Abbau der Bremskraft bereits vor Ablauf der vorgegebenen Haltezeit erfolgt.

Die Vorrichtung zur Steuerung der Bremsanlage eines Kraftfahrzeugs enthält
Wegrollverhinderungsmittel, mit denen zur Verhinderung des Wegrollens des Fahrzeugs nach einem Haltevorgang ein erster Bremskraftwert an wenigstens einem Rad des Fahrzeugs fahrerunabhängig eingestellt und während einer vorgegebenen, begrenzten Haltezeit gehalten wird.
Die Vorrichtung enthält weiterhin
- Ermittlungsmittel, welche eine eine Querbewegung des Fahrzeugs charakterisierende Quergröße ermitteln, wobei die Gierrate in die Ermittlung der Quergröße eingeht, sowie
- Bremskraftabbaumittel, durch welche abhängig von der Quergröße ein Abbau der Bremskraft bereits vor Ablauf der vorgegebenen Haltezeit erfolgt.

Eine vorteilhafte Ausgestaltung der Erfindung ist dadurch gekennzeichnet,
- dass es sich bei den Ermittlungsmitteln um einen Sensor oder ein Sensorsystem zur Ermittlung der Gierrate handelt und
- dass es sich bei der Quergröße um die Gierrate handelt,

Eine vorteilhafte Ausgestaltung der Erfindung ist dadurch gekennzeichnet, dass es sich bei den Ermittlungsmitteln um einen Gierratensensor handelt.

Eine vorteilhafte Ausgestaltung der Erfindung ist dadurch gekennzeichnet, dass die Bremskraftabbaumittel so ausgestaltet sind, dass ein Abbau der Bremskraft bereits vor Ablauf der vorgegebenen Haltezeit erfolgt, wenn die Gierrate einen vorgegebenen Grenzwert überschreitet.

Eine vorteilhafte Ausgestaltung der Erfindung ist dadurch gekennzeichnet,
- dass Speichermittel vorhanden sind, in welchen ein nach erreichtem Haltevorgang ermittelter Wert der Gierrate abgespeichert wird und
- die Bremskraftabbaumittel so ausgestaltet sind, dass ein Abbau der Bremskraft bereits vor Ablauf der vorgegebenen Haltezeit erfolgt, wenn der Betrag der Differenz zwischen der momentan ermittelten Gierrate und der in den Speichermitteln abgespeicherten Gierrate einen vorgegebenen Grenzwert überschreitet.

Die vorteilhaften Ausgestaltungen des erfindungsgemäßen Verfahrens äußern sich auch als vorteilhafte Ausgestaltungen der erfindungsgemäßen Vorrichtung und umgekehrt.

### Zeichnung

Ein Ausführungsbeispiel der Erfindung ist in den Zeichnungen 1 bis 3 dargestellt.
Fig. 1 zeigt den Ablauf des erfindungsgemäßen Verfahrens anhand von Sensorsignalen.
Fig. 2 zeigt den Ablauf des erfindungsgemäßen Verfahrens anhand eines Flussdiagramms
Fig. 3 zeigt in den Aufbau der erfindungsgemäßen Vorrichtung.

### Ausführungsbeispiele

Bremst der Fahrer eines Kraftfahrzeugs an einer Steigung in Längsrichtung des Fahrzeugs bis zum Stillstand und löst danach die Bremse, dann werden durch eine Hillholder-Funktion alle Räder während eines Zeitintervalls vorgebbarer Länge festgehalten (Bremsdruck wird "eingesperrt"). Befindet sich das Fahrzeug auf einer Steigung mit kleinem Reibwert (z.B. vereiste Fahrbahn), dann kann es zum Rutschen des Fahrzeugs kommen und das Fahrzeug rutscht mit vier blockierten Rädern zurück. Der Fahrer hat in dieser Zeit keine Möglichkeit, das Fahrzeug zu lenken, da über die Räder keine Kraft übertragen werden kann. Der Vorteil der Erfindung liegt darin, ein Drehen des Fahrzeugs und damit ein unkontrolliertes Rutschen zu erkennen und die Hillholder-Funktion zu beenden.
Deshalb wird bei der Erfindung ein Drehen des Fahrzeugs und damit ein unkontrolliertes Rutschen erkannt. Als Folge eines erkannten Drehens wird die Hillholder-Funktion beendet. Dann sind die Räder wieder freilaufend und der Fahrer kann eine Richtungskorrektur vornehmen und das Fahrzeug wieder unter Kontrolle bringen.

Es wird über auswertbare Signale herausgefunden, ob ein Drehen des Fahrzeugs während einer aktiven Hillhold-Funklion stattfindet. Dazu wird mit Hilfe der Auswertung von Signalen, welche einen Queranteil an der Fahrzeugbewegung erfassen, untersucht, ob eine Drehbewegung des Fahrzeugs vorliegt.
Insbesondere der Verlauf des Ausgangssignals des Drehratensensors bzw. des Gierratenssensors ist dabei von Interesse, es kann jedoch auch beispielsweise das Ausgangssignal des Querbeschleunigungssensors betrachtet werden.

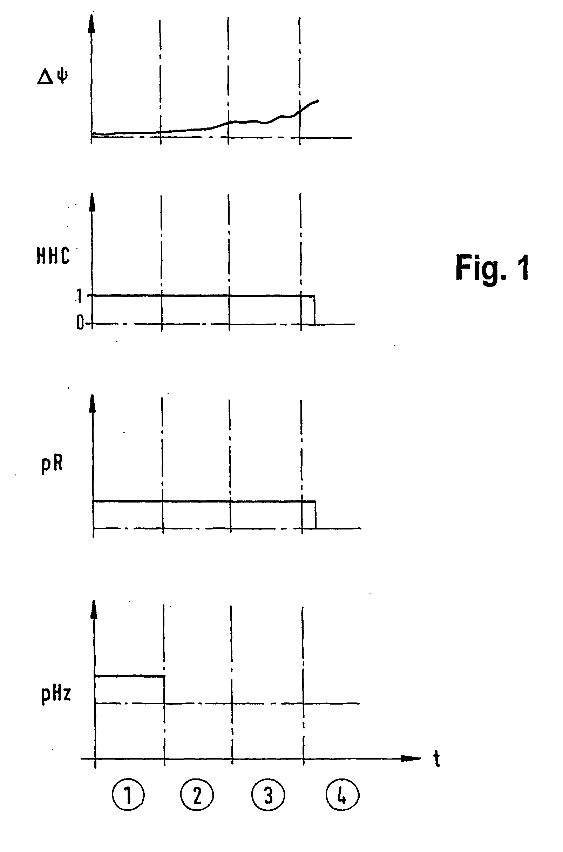

Typische zeitliche Verläufe von Sensorsignalen bzw. weiteren Größen während des Ablaufs der erfindungsgemäßen Verfahrens sind in Fig. 1 dargestellt. Dabei ist in Abszissenrichtung jeweils die Zeit t aufgetragen, in Ordinatenrichtung ist
- im obersten Diagramm die mit Δψ bezeichnete Änderung der Gierrate,
- im zweiten Diagramm von oben der mit HHC bezeichnete Status des Hillholders, wobei HHC = 1 einen aktivierten Hillholder und HHC = 0 einen nicht aktivierten Hillholder bezeichnen,
- im dritten Diagramm von oben der Druck pR in einem Radbremszylinder und
- im untersten Diagramm der Druck pHz im Hauptbremszylinder aufgetragen.
   Entlang der ganz unten eingezeichneten Zeitachse t werden vier mit 1, 2, 3 und 4 bezeichnete Zeitintervalle unterschieden.

### Zeitintervall 1:

Das Fahrzeug kommt an einer Steigung zum Stillstand. Der Fahrer betätigt das Bremspedal (pHz > 0) und der Hillholder ist aktiviert (HHC = 1). Das Ausgangssignal ψ des Gierratensensors wird abgespeichert. Durch Vergleich der abgespeicherten Gierrate mit der aktuellen Gierrate wird deren Änderung Δψ ermittelt. Δψ ist ungefähr Null.

### Zeitintervall 2:

Der Fahrer löst das Bremspedal (pHz sinkt auf 0). Der Hillholder bleibt jedoch weiter aktiviert (HHC = 1), um ein Wegrollen des Fahrzeugs zu verhindern.

### Zeitintervall 3:

Δψ wächst leicht an, übersteigt aber noch keinen Grenzwert.

### Zeitintervall 4:

Der Wert von Δψ übersteigt einen Grenzwert. D.h. es wird eine Drehbewegung des Fahrzeugs detektiert, welche nur auf einen Rutschvorgang zurückzuführen sein kann. Als Folge davon wird der Hillholder deaktiviert (HHC = 0) und der Druck pR im Radbremszylinder (bzw. in allen Radbremszylindern) abgebaut.

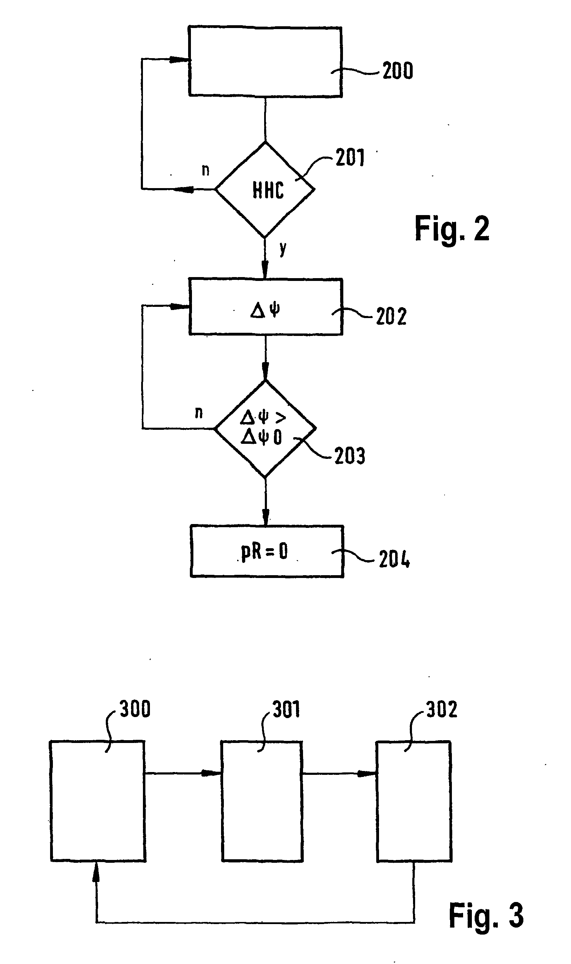

Der Ablauf des erfindungsgemäßen Verfahrens ist in Fig. 2 dargestellt. Dabei kennzeichnet Block 200 den Start des Verfahrens. Anschließend wird im Block 201 (HHC) überprüft, ob die Aktivierungsbedingungen für den Hillholder erfüllt sind (z.B. geneigte Fahrbahn und Fahrzeugstillstand). Lautet das Ergebnis nein (in Fig. 2 als "n" gekennzeichnet), dann wird zum Start des Verfahrens zurückverzweigt. Lautet das Ergebnis dagegen ja (in Fig. 2 als "y" gekennzeichnet), dann wird in Block 202 die Größe Δψ ermittelt. Anschließend wird in Block 203 abgefragt, ob Δψ einen Grenzwert Δψ0 überschreitet, d.h. Δψ > Δψ0. Lautet die Antwort nein, dann wird in Block 202 die Größe Δψ erneut ermittelt. Lautet die Antwort ja, dann wird in Block 204 der Bremsdruck pR in den Radbremszylindern vorzeitig deaktiviert.

Der Aufbau der erfindungsgemäßen Vorrichtung ist in Fig. 3 dargestellt. Dabei enthält Block 300 die Wegrollverhinderungsmittel, welche wiederum die Ermittlungsmittel 301 ansteuern. Abhängig vom Ergebnis der Ermittlungsmittel werden die Bremskraftabbaumittel 302 angesteuert, welche wiederum die Wegrollverhinderungsmittel 300 vorzeitig deaktivieren.

## Patentansprüche

1. Verfahren zur Steuerung der Bremsanlage eines Kraftfahrzeugs,
- bei dem zur Verhinderung des Wegrollens des Fahrzeugs nach einem Haltevorgang ein erster Bremskraftwert an wenigstens einem Rad des Fahrzeugs fahrerunabhängig eingestellt und bis zum Vorliegen einer Abbaubedingung gehalten wird, wobei es sich bei der Abbaubedingung um das Verstreichen eines Haltezeitintervalls vorgegebener Länge handelt,
**dadurch gekennzeichnet,**
- **dass** eine eine Querbewegung des Fahrzeugs charakterisierende Quergröße (Δψ) ermittelt wird, wobei die Gierrate in die Ermittlung der Quergröße (Δψ) eingeht und
- abhängig von der Quergröße (Δψ) ein Abbau der Bremskraft bereits vor Vorliegen der Abbaubedingung erfolgt.

2. Verfahren nach Anspruch 1, **dadurch gekennzeichnet, dass** ein Abbau der Bremskraft bereits vor Vorliegen der Abbaubedingung erfolgt, wenn die Gierrate einen vorgegebenen Grenzwert überschreitet.

3. Verfahren nach Anspruch 1, **dadurch gekennzeichnet,**
- **dass** nach erreichtem Haltevorgang der Wert der Gierrate ermittelt und abgespeichert wird und
- **dass** ein Abbau der Bremskraft bereits vor Vorliegen der Abbaubedingung erfolgt, wenn der Betrag der Differenz (Δψ) zwischen der momentan ermittelten Gierrate und der abgespeicherten Gierrate einen vorgegebenen Grenzwert (Δψ0) überschreitet.

4. Verfahren nach Anspruch 1, **dadurch gekennzeichnet, dass** die Querbeschleunigung in die Ermittlung der Quergröße eingeht.

5. Verfahren nach Anspruch 1, **dadurch gekennzeichnet,**
- **dass** abhängig von der Quergröße (Δψ) ein Rutschvorgang des Kraftfahrzeugs detektiert wird und
- bei einem detektierten Rutschvorgang ein Abbau der Bremskraft bereits vor Vorliegen der Abbaubedingung erfolgt.

6. Vorrichtung zur Steuerung der Bremsanlage eines Kraftfahrzeugs,
- welche Wegrollverhinderungsmittel (300) enthält, mit denen zur Verhinderung des Wegrollens des Fahrzeugs nach einem Haltevorgang ein erster Bremskraftwert an wenigstens einem Rad des Fahrzeugs fahrerunabhängig eingestellt und bis zum Vorliegen einer Abbaubedingung gehalten wird, wobei es sich bei der Abbaubedingung um das Verstreichen eines Haltezeitintervalls vorgegebener Länge handelt,
**dadurch gekennzeichnet, dass** weiterhin
- Ermittlungsmittel (301), welche eine eine Querbewegung des Fahrzeugs charakterisierende Quergröße ermitteln, wobei die Gierrate in die Ermittlung der Quergröße (ΔΨ) eingeht, sowie
- Bremskraftabbaumittel (302), durch welche abhängig von der Quergröße ein Abbau der Bremskraft bereits vor Vorliegen der Abbaubedingung erfolgt,
enthalten sind.

7. Vorrichtung nach Anspruch 6, **dadurch gekennzeichnet,**
- **dass** es sich bei den Ermittlungsmitteln (301) um einen Sensor oder ein Sensorsystem zur Ermittlung der Gierrate (ψ) handelt und
- **dass** es sich bei der Quergröße um die Gierrate (ψ) handelt,

8. Vorrichtung nach Anspruch 7, **dadurch gekennzeichnet, dass** es sich bei den Ermittlungsmitteln (301) um einen Gierratensensor handelt.

9. Vorrichtung nach Anspruch 8, **dadurch gekennzeichnet, dass** die Bremskraftabbaumittel (302) so ausgestaltet sind, dass ein Abbau der Bremskraft bereits vor Vorliegen der Abbaubedingung erfolgt, wenn die Gierrate einen vorgegebenen Grenzwert überschreitet.

10. Vorrichtung nach Anspruch 7, **dadurch gekennzeichnet,**
- **dass** Speichermittel vorhanden sind, in welchen ein nach erreichtem Haltevorgang ermittelter Wert der Gierrate abgespeichert wird und
- die Bremskraftabbaumittel so ausgestaltet sind, dass ein Abbau der Bremskraft bereits vor Vorliegen der Abbaubedingung erfolgt, wenn der Betrag der Differenz (ΔΨ) zwischen der momentan ermittelten Gierrate und der in den Speichermitteln abgespeicherten Gierrate einen vorgegebenen Grenzwert (ΔΨ0) überschreitet.

## Claims

1. Method for controlling the brake system of a motor vehicle,
- in which, in order to prevent the vehicle from rolling away after a stopping process, a first braking force value is set independently of the driver at at least one wheel of the vehicle and is held until a reduction condition is present,
wherein the reduction condition is the passing of a holding time interval of predefined length,
**characterized**
- **in that** a lateral variable (ΔΨ) which characterizes a lateral movement of the vehicle is determined, wherein the yaw rate is included in the determination of the lateral variable (ΔΨ), and
- a reduction in the braking force already occurs as a function of the lateral variable (ΔΨ) before the reduction condition is present.

2. Method according to Claim 1, **characterized in that** a reduction in the braking force already occurs before the reduction condition is present if the yaw rate exceeds a predefined limiting value.

3. Method according to Claim 1, **characterized**
- **in that** after the halting process has been carried out the value of the yaw rate is determined and stored, and
- **in that** a reduction in the braking force already occurs before the reduction condition is present if the absolute value of the difference (ΔΨ) between the instantaneous determined yaw rate and the stored yaw rate exceeds a predefined limiting value (ΔΨ0).

4. Method according to Claim 1, **characterized in that** the lateral acceleration is included in the determination of the lateral variable.

5. Method according to Claim 1, **characterized**
- **in that** a skidding process of the motor vehicle is detected as a function of the lateral variable (ΔΨ), and
- when a skidding process is detected a reduction of the braking force already occurs before the reduction condition is present.

6. Device for controlling the brake system of a motor vehicle,
- which contains rolling-away prevention means (300) with which, in order to prevent the vehicle from rolling away after a holding process, a first braking force value is set independently of the driver at at least one wheel of the vehicle and is held until a reduction condition is present,
wherein the reduction condition is the passing of a holding time interval of predefined length,
**characterized in that** furthermore
- determining means (301) which determine a lateral variable which characterizes a lateral movement of the vehicle are provided, the yaw rate being included in the determination of the lateral variable (Δψ), and
- braking force reduction means (302) by means of which a reduction in the braking force already occurs as a function of the lateral variable before the reduction condition is present are provided.

7. Device according to Claim 6, **characterized**
- **in that** the determining means (301) are a sensor or a sensor system for determining the yaw rate (Ψ), and
- **in that** the lateral variable is the yaw rate (Ψ).

8. Device according to Claim 7, **characterized in that** determining means (301) are a yaw rate sensor.

9. Device according to Claim 8, **characterized in that** the braking force reduction means (302) are configured in such a way that a reduction in the braking force already occurs before the reduction condition is present if the yaw rate exceeds a predefined limiting value.

10. Device according to Claim 7, **characterized**
- **in that** memory means are provided in which a value of the yaw rate which is determined after the holding process is carried out is stored, and
- the braking force reduction means are configured in such a way that a reduction in the braking force already occurs before the reduction condition is present if the absolute value of the difference (ΔΨ) between the instantaneously determined yaw rate and the yaw rate which is stored in the memory means exceeds a predefined limiting value (ΔΨ0).

## Revendications

1. Procédé de commande d'une installation de frein d'un véhicule automobile selon lequel,
- pour éviter que le véhicule ne roule de lui-même après une opération d'arrêt, on règle une première valeur de la force de freinage sur au moins une roue du véhicule, de façon indépendante du conducteur, et on la maintient jusqu'à ce qu'arrive une condition de réduction, et
- la condition de réduction est la fin d'un intervalle de temps de retenue de longueur prédéfinie,
**caractérisé en ce que**
- on détermine une grandeur transversale (ΔΨ) caractérisant un mouvement transversal du véhicule, la vitesse de lacet intervenant dans la détermination de la grandeur transversale (ΔΨ),
- indépendamment de la grandeur transversale (ΔΨ), on réduit la force de freinage déjà lorsque existe la condition de réduction.

2. Procédé selon la revendication 1,
**caractérisé en ce que**
la réduction de la force de freinage se fait déjà avant qu'existe la condition de réduction si la vitesse de lacet dépasse une valeur limite prédéfinie.

3. Procédé selon la revendication 1,
**caractérisé en ce que**
- après avoir effectué une opération d'arrêt, on détermine la valeur de la vitesse de lacet et on l'enregistre en mémoire, et
- la réduction de la force de freinage se fait déjà avant que ne se produise la condition de réduction si la valeur de la différence (ΔΨ) entre la vitesse de lacet instantanée est déterminée et la vitesse de lacet en mémoire dépasse une valeur de seuil prédéfinie (ΔΨ0).

4. Procédé selon la revendication 1,
**caractérisé en ce que**
l'accélération transversale intervient dans la détermination de la grandeur transversale.

5. Procédé selon la revendication 1,
**caractérisé en ce qu'**
- en fonction de la grandeur transversale (ΔΨ), on détecte une opération de glissement du véhicule automobile, et
- en cas de détection d'une opération de glissement, on réduit la force de freinage dès avant que ne se produise la condition de réduction.

6. Dispositif de commande de l'installation de frein d'un véhicule automobile, comportant :
- des moyens évitant que le véhicule ne roule (300), et qui pour éviter que le véhicule ne roule après une opération d'arrêt, règlent une première valeur de la force de freinage d'au moins une roue du véhicule indépendamment des conducteurs et la maintienne jusqu'à ce que se produise une condition de réduction,
- la condition de réduction étant la fin d'un intervalle de temps de retenue de longueur prédéfinie,
**caractérisé en outre en ce que**
- des moyens de détermination (301) déterminent une grandeur transversale caractérisant un mouvement transversal du véhicule, et
- la vitesse de lacet entre dans la détermination de la grandeur transversale (ΔΨ), et
- des moyens de réduction de la force de freinage (302) qui, en fonction de la grandeur transversale, réduisent la force de freinage dès avant que ne se produise la condition de réduction.

7. Dispositif selon la revendication 6,
**caractérisé en ce que**
- les moyens de détermination (301) sont constitués par un capteur dans un système de capteur pour déterminer la vitesse de lacet (Ψ), et
- la grandeur transversale est la vitesse de lacet (Ψ).

8. Dispositif selon la revendication 7,
**caractérisé en ce que**
les moyens de détermination (301) sont constitués par un capteur de vitesse de lacet.

9. Dispositif selon la revendication 8,
**caractérisé en ce que**
les moyens de réduction de la force de freinage (302) sont conçus pour réduire la force de freinage dès avant que ne se produise la condition de réduction si la vitesse de lacet dépasse une valeur limite prédéfinie.

10. Dispositif selon la revendication 7,
**caractérisé par**
- des moyens de mémoire dans lesquels on enregistre la valeur obtenue de la vitesse de lacet après une opération d'arrêt, et
- les moyens de réduction de la force de freinage sont réalisés pour que la réduction de la force de freinage se fasse dès avant que ne se produise la condition de réduction si la valeur de la différence (ΔΨ) entre la vitesse de lacet instantanée, obtenue et la vitesse de lacet enregistrée dans la mémoire dépasse une valeur limite prédéfinie (ΔΨ0).
